# EUROPEAN PATENT APPLICATION

(11) **EP 3 249 871 A1**
(43) Date of publication of application: **29.11.2017**
(21) Application number: 15882312.0
(22) Date of filing: 16.02.2015
(51) Int. Cl.: H04L 29/02

(54) **METHOD AND DEVICE FOR UPDATING NETWORK SERVICE DESCRIPTOR**

(71) Applicant: Huawei Technologies Co., Ltd., Longgang District Shenzhen, Guangdong 518129 (CN)
(72) Inventor: LIU, Jianning, Shenzhen Guangdong 518129 (CN); YU, Fang, Shenzhen Guangdong 518129 (CN)
(74) Representative: Körber, Martin Hans
(86) International application number: PCT/CN2015/073177
(87) International publication number: WO 2016/131172

(57) **Abstract**

The present invention relates to the field of mobile communications technologies, and in particular, to two methods for updating an NSD and an apparatus. One method is: receiving, by an NFVO, an NSD update request sent by a transmit end; and sending, by the NFVO, to an NSD coordinator an NSD update instruction carrying a to-be-updated NSD, so that the NSD coordinator updates the NSD, and the NSD coordinator updates the NSD according to the received NSD update instruction. The other method is provided: when receiving a trigger message, obtaining, by an NFVO, an NSD in which a source VNF is located, where the trigger message is used to indicate that a status of a VNF is changed to disabled, and the source VNF is a VNF whose status is changed to disabled; and sending, by the NFVO, to an NSD coordinator an NSD update instruction carrying the NSD, so that the NSD coordinator updates the NSD according to the received NSD update instruction. Therefore, a manual operation is avoided, and update efficiency and timeliness are further improved.

## Description

### TECHNICAL FIELD

The present invention relates to the field of communications technologies, and in particular, to a method for updating a network service descriptor NSD and an apparatus.

### BACKGROUND

Initiated by thirteen main telecommunications operators in the world, NFV (Network Functions Virtualization, Network Functions Virtualization) is an organization in which numerous device vendors, IT (Information Technology, information technology) vendors, and the like participate. The NFV is intended to define a requirement of operator network functions virtualization and a related technical report, and expects to implement some network functions in a software form by means of an IT virtualization technology and using a general high-performance and high-capacity server, a switch, and a storage device. For example, software and hardware separation may be implemented for various network devices, such as a server, a router, a storage device, and a switch, by using an NFV technology, and they may be deployed at a data center, a network node, a user home, or the like.

An NSD (Network Service Descriptor, network service descriptor) is an important part of the NFV and is used to describe a deployment parameter and a topology structure of an NS (Network Service, network service), and a file of a component of the NS. The NSD includes a VNFD ((VNF Descriptor, virtualized network function descriptor), a VNF (Virtualized Network Function, virtualized network function)), a VLD (Virtualized Link Descriptor, virtual link descriptor), a VNFFGD (VNF Forwarding Graph Descriptor, VNF forwarding graph descriptor), a monitoring parameter, and the like, where the VNFD is a descriptor of the VNF and describes a component and a parameter of the VNF.

In the prior art, when an NSD is being updated, the NSD is offline updated and is uploaded to an NFVO (NFV Orchestrator, NFV orchestrator), that is, the NSD is uploaded after being manually updated. In this way, there exist disadvantages of relatively low update efficiency and relatively poor timeliness.

### SUMMARY

Embodiments of the present invention provide a method for updating an NSD and an apparatus to eliminate disadvantages of relatively low update efficiency and relatively poor timeliness in the prior art.

According to a first aspect, a method for updating a network service descriptor NSD is provided, including:
receiving, by a network functions virtualization orchestrator NFVO, an NSD update request sent by a transmit end; and
sending, by the NFVO, to an NSD coordinator an NSD update instruction carrying a to-be-updated NSD, so that the NSD coordinator updates the NSD.

With reference to the first aspect, in a first possible implementation, the NSD update request carries the NSD; or
the NSD update request carries an NSD identifier corresponding to the NSD; and
after the receiving, by an NFVO, an NSD update request and before the sending, by the NFVO, an NSD update instruction, the method further includes:
obtaining, by the NFVO, the NSD according to the NSD identifier.

With reference to the first possible implementation of the first aspect, in a second possible implementation, the NSD update request further carries a source virtualized network function VNF identifier and a target VNF identifier;
before the sending, by the NFVO, to an NSD coordinator an NSD update instruction, the method further includes:
obtaining, by the NFVO, a target VNF package corresponding to the target VNF identifier; and
the sending, by the NFVO, to an NSD coordinator an NSD update instruction specifically includes:
   sending, by the NFVO, the NSD coordinator the NSD update instruction, wherein the NSD update instruction further carries the target VNF package and the source VNF identifier.

With reference to any one of the first aspect or the first to the second possible implementations of the first aspect, in a third possible implementation, before the sending, by the NFVO, to an NSD coordinator an NSD update instruction, the method further includes:
determining, by the NFVO, that the transmit end is authorized to send the NSD update request.

With reference to any one of the first to the third possible implementations of the first aspect, in a fourth possible implementation, after the receiving, by an NFVO, an NSD update request sent by a transmit end, the method further includes:
sending a network service NS catalog functional entity a notification message carrying the NSD identifier, where the notification message is used to instruct the NS catalog functional entity to record a status of the NSD corresponding to the NSD identifier as disabled.

With reference to any one of the first to the fourth possible implementations of the first aspect, in a fifth possible implementation, after the sending, by the NFVO, to an NSD coordinator an NSD update instruction, the method further includes:
receiving an NSD update complete message that is sent by the NSD coordinator after finishing updating the NSD;
adding the target VNF identifier to the NSD update complete message; and
sending to a VNF catalog functional entity the NSD update complete message to which the target VNF identifier is added, so that the VNF catalog functional entity updates a status of a target VNF corresponding to the target VNF identifier.

With reference to the fifth possible implementation of the first aspect, in a sixth possible implementation, after the receiving, by the NFVO, an NSD update complete message, the method further includes:
operating the target VNF package, and instantiating the target VNF to run the target VNF;
obtaining a source VNF corresponding to the source VNF identifier; and
switching data running on the source VNF corresponding to the source VNF identifier to the running target VNF to run.

With reference to the fifth possible implementation of the first aspect, in a seventh possible implementation, after the sending, by the NFVO, to a VNF catalog functional entity the NSD update complete message to which the target VNF identifier is added, the method further includes:
receiving a status update complete message of the target VNF that is returned by the VNF catalog functional entity; and
sending the NSD update complete message to a transmit end after the status update complete message of the target VNF is received.

According to a second aspect, a method for updating a network service descriptor NSD is provided, including:
when receiving a trigger message, obtaining, by a network functions virtualization orchestrator NFVO, an NSD in which a source VNF is located, where the trigger message is used to indicate that a status of a virtualized network function VNF is changed to disabled, and the source VNF is a VNF whose status is changed to disabled; and
sending, by the NFVO, to an NSD coordinator an NSD update instruction carrying the NSD, so that the NSD coordinator updates the NSD.

With reference to the second aspect, in a first possible implementation, before the sending, by the NFVO, to an NSD coordinator an NSD update instruction, the method further includes:
receiving, by the NFVO, an update confirm message returned by a VNF catalog functional entity, where the update confirm message is used to notify the NFVO that the NSD can be updated.

With reference to the first possible implementation of the second aspect, in a second possible implementation, the update confirm message carries NSD update policy information, and the NSD update policy information is used to indicate how the NSD is updated.

With reference to any one of the second aspect or the first to the second possible implementations of the second aspect, in a third possible implementation, before the sending, by the NFVO, to an NSD coordinator an NSD update instruction carrying the NSD, the method further includes:
obtaining a target VNF package and an identifier of the source VNF; where
the NSD update instruction further carries the target VNF package and the identifier of the source VNF.

With reference to the third possible implementation of the second aspect, in a fourth possible implementation, after the sending, by the NFVO, to an NSD coordinator an NSD update instruction, the method further includes:
receiving an NSD update complete message that is sent by the NSD coordinator after finishing updating the NSD;
obtaining a target VNF identifier corresponding to the target VNF package, and adding the target VNF identifier to the NSD update complete message; and
sending to the VNF catalog functional entity the NSD update complete message to which the target VNF identifier is added, so that the VNF catalog functional entity updates a status of a target VNF corresponding to the target VNF identifier.

With reference to the fourth possible implementation of the second aspect, in a fifth possible implementation, after the receiving, by the NFVO, an NSD update complete message that is sent by the NSD coordinator after finishing updating the NSD, the method further includes:
operating the target VNF package, and instantiating the target VNF to run the target VNF; and
switching data running on the source VNF corresponding to the identifier of the source VNF to the running target VNF to run.

With reference to the fourth or the fifth possible implementation of the second aspect, in a sixth possible implementation, after the sending, by the NFVO, the VNF catalog functional entity the NSD update complete message to which the target VNF identifier is added, the method further includes:
receiving a status update complete message of the target VNF that is returned by the VNF catalog functional entity; and
sending the NSD update complete message to a transmit end after the status update complete message of the target VNF is received.

According to a third aspect, a method for updating a network service descriptor NSD is provided, including:
receiving, by an NSD coordinator, an NSD update instruction that carries an NSD and is sent by a network functions virtualization orchestrator NFVO; and
updating, by the NSD coordinator, the NSD according to the NSD update instruction.

With reference to the third aspect, in a first possible implementation, the NSD update instruction further carries a target VNF package and a source virtualized network function VNF identifier; and
the updating, by the NSD coordinator, the NSD according to the NSD update instruction specifically includes:
determining, by the NSD coordinator, a configuration parameter that is corresponding to the source VNF identifier and in the NSD;
obtaining, by the NSD coordinator, a parameter value that is corresponding to the configuration parameter and in the target VNF package; and
replacing, by the NSD coordinator, an initial parameter value corresponding to the configuration parameter with the determined parameter value.

With reference to the third aspect or the first possible implementation of the third aspect, in a second possible implementation, after the updating, by the NSD coordinator, the NSD according to the NSD update instruction, the method further includes:
sending an NSD update complete message to the NFVO; and
sending to a network service NS catalog functional entity a notification message carrying an updated NSD, where the notification message is used to notify the NS catalog functional entity that a status of the updated NSD is enabled.

According to a fourth aspect, a network functions virtualization orchestrator NFVO is provided, including:
a receiving unit, configured to receive an NSD update request sent by a transmit end; and
a sending unit, configured to send to an NSD coordinator an NSD update instruction carrying a to-be-updated NSD, so that the NSD coordinator updates the NSD.

With reference to the fourth aspect, in a first possible implementation, the NSD update request carries the NSD; or
the NSD update request carries an NSD identifier corresponding to the NSD; and
the NFVO further includes an obtaining unit, configured to obtain the NSD according to the NSD identifier.

With reference to the first possible implementation of the fourth aspect, in a second possible implementation, the NSD update request further carries a source virtualized network function VNF identifier and a target VNF identifier;
the obtaining unit is further configured to:
obtain a target VNF package corresponding to the target VNF identifier; and
that the sending unit sends to an NSD coordinator an NSD update instruction is specifically:
   sending the NSD coordinator the NSD update instruction, wherein the NSD update instruction further carries the target VNF package and the source VNF identifier.

With reference to any one of the fourth aspect, or the first to the second possible implementations of the fourth aspect, in a third possible implementation, the receiving unit is further configured to:
determine that the transmit end is authorized to send the NSD update request.

With reference to any one of the first to the third possible implementations of the fourth aspect, in a fourth possible implementation, the sending unit is further configured to:
send to a network service NS catalog functional entity a notification message carrying the NSD identifier, where the notification message is used to instruct the NS catalog functional entity to record a status of the NSD corresponding to the NSD identifier as disabled.

With reference to any one of the first to the fourth possible implementations of the fourth aspect, in a fifth possible implementation, the receiving unit is further configured to:
receive an NSD update complete message that is sent by the NSD coordinator after finishing updating the NSD; and
add the target VNF identifier to the NSD update complete message; and
the sending unit is further configured to send to a VNF catalog functional entity the NSD update complete message to which the target VNF identifier is added, so that the VNF catalog functional entity updates a status of a target VNF corresponding to the target VNF identifier.

With reference to the fifth possible implementation of the fourth aspect, in a sixth possible implementation, the NFVO further includes an instantiation unit and the instantiation unit is configured to:
operate the target VNF package, and instantiate the target VNF to run the target VNF;
obtain a source VNF corresponding to the source VNF identifier; and
switch data running on the source VNF corresponding to the source VNF identifier to the running target VNF to run.

With reference to the fifth possible implementation of the fourth aspect, in a seventh possible implementation, the receiving unit is further configured to:
receive a status update complete message of the target VNF that is returned by the VNF catalog functional entity; and
the sending unit is further configured to send the NSD update complete message to a transmit end after the status update complete message of the target VNF is received.

According to a fifth aspect, a network functions virtualization orchestrator NFVO is provided, including:
a receiving unit, configured to: when receiving a trigger message, obtain an NSD in which a source VNF is located, where the trigger message is used to indicate that a status of a virtualized network function VNF is changed to disabled, and the source VNF is a VNF whose status is changed to disabled; and
a sending unit, configured to send to an NSD coordinator an NSD update instruction carrying the NSD, so that the NSD coordinator updates the NSD.

With reference to the fifth aspect, in a first possible implementation, the receiving unit is further configured to:
receive an update confirm message returned by a VNF catalog functional entity, where the update confirm message is used to notify the NFVO that the NSD can be updated.

With reference to the first possible implementation of the fifth aspect, in a second possible implementation, the update confirm message carries NSD update policy information, and the NSD update policy information is used to indicate how the NSD is updated.

With reference to any one of the fifth aspect, or the first to the second possible implementations of the fifth aspect, in a third possible implementation, the NFVO further includes an obtaining unit and the obtaining unit is configured to:
obtain a target VNF package and an identifier of the source VNF; where
the NSD update instruction further carries the target VNF package and the identifier of the source VNF.

With reference to the third possible implementation of the fifth aspect, in a fourth possible implementation, the receiving unit is further configured to:
receive an NSD update complete message that is sent by the NSD coordinator after finishing updating the NSD; and
obtain a target VNF identifier corresponding to the target VNF package, and add the target VNF identifier to the NSD update complete message; and
the sending unit is further configured to send to a VNF catalog functional entity the NSD update complete message to which the target VNF identifier is added, so that the VNF catalog functional entity updates a status of a target VNF corresponding to the target VNF identifier.

With reference to the fourth possible implementation of the fifth aspect, in a fifth possible implementation, the NFVO further includes an instantiation unit and the instantiation unit is configured to:
operate the target VNF package, and instantiate the target VNF to run the target VNF; and
switch data running on the source VNF corresponding to the identifier of the source VNF to the running target VNF to run.

With reference to the fourth or the fifth possible implementation of the fifth aspect, in a sixth possible implementation, the receiving unit is further configured to:
receive a status update complete message of the target VNF that is returned by the VNF catalog functional entity; and
the sending unit is further configured to send the NSD update complete message to a transmit end after the status update complete message of the target VNF is received.

According to a sixth aspect, a network service descriptor NSD coordinator is provided, including:
a receiving unit, configured to receive an NSD update instruction that carries an NSD and is sent by a network functions virtualization orchestrator NFVO; and
an update unit, configured to update the NSD according to the NSD update instruction.

With reference to the sixth aspect, in a first possible implementation, the NSD update instruction further carries a target VNF package and a source virtualized network function VNF identifier; and
the update unit is specifically configured to:
determine a configuration parameter that is corresponding to the source VNF identifier and in the NSD;
obtain a parameter value that is corresponding to the configuration parameter and in the target VNF package; and
replace an initial parameter value corresponding to the configuration parameter with the determined parameter value.

With reference to the sixth aspect or the first possible implementation of the sixth aspect, in a second possible implementation, the NSD further includes a sending unit and the sending unit is configured to:
send an NSD update complete message to the NFVO; and
send to a network service NS catalog functional entity a notification message carrying an updated NSD, where the notification message is used to notify the NS catalog functional entity that a status of the updated NSD is enabled.

In the prior art, an NSD is manually updated. Therefore, there exist disadvantages of relatively low update efficiency and relatively poor timeliness. In embodiments of the present invention, a method for updating an NSD is provided: receiving, by an NFVO, an NSD update request sent by a transmit end; and sending, by the NFVO, to an NSD coordinator an NSD update instruction carrying a to-be-updated NSD, so that the NSD coordinator updates the NSD, and the NSD coordinator updates the NSD according to the received NSD update instruction. Therefore, a manual operation is avoided, and update efficiency and timeliness are further improved.

Another method for updating an NSD is provided: when receiving a trigger message, obtaining, by an NFVO, an NSD in which a source VNF is located, where the trigger message is used to indicate that a status of a VNF is changed to disabled, and the source VNF is a VNF whose status is changed to disabled; and sending, by the NFVO, to an NSD coordinator an NSD update instruction carrying the NSD, so that the NSD coordinator updates the NSD, and the NSD coordinator updates the NSD according to the received NSD update instruction. Therefore, a manual operation is avoided, and update efficiency and timeliness are further improved.

### BRIEF DESCRIPTION OF DRAWINGS

FIG. 1 is a flowchart for updating an NSD according to an embodiment of the present invention;
FIG. 2 is another flowchart for updating an NSD according to an embodiment of the present invention;
FIG. 3 is still another flowchart for updating an NSD according to an embodiment of the present invention;
FIG. 4 is a flowchart for updating an NSD according to an embodiment of the present invention;
FIG. 5A is a schematic functional structural diagram of an NFVO according to an embodiment of the present invention;
FIG. 5B is another schematic functional structural diagram of an NFVO according to an embodiment of the present invention;
FIG. 6A is still another schematic functional structural diagram of an NFVO according to an embodiment of the present invention;
FIG. 6B is yet another schematic functional structural diagram of an NFVO according to an embodiment of the present invention;
FIG. 7A is a schematic functional structural diagram of an NSD coordinator according to an embodiment of the present invention; and
FIG. 7B is another schematic functional structural diagram of an NSD coordinator according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The following explains some terms in this application, so as to facilitate understanding by a person skilled in the art.

Main function modules of an NFV E2E (End to End) are as follows:
OSS (Operations Support System, operations support system)/BSS (Base Station Subsystem, base station subsystem): used to initiate a service request to an NFVO and a request for a service-required resource, and responsible for troubleshooting.
NFVO: responsible for orchestrating and managing resources according to an OSS/BSS service request to implement an NFV service and monitor a VNF or NFVI (NFV Infrastructure, NFV infrastructure) resource and running status information thereof in real time.
VNFM (Virtualized Network Function Manager, VNF manager): responsible for managing a VNF life cycle, such as a start time, time to live, and VNF running status information.
VIM (Virtualized Infrastructure Manager, virtualized infrastructure manager): responsible for managing and allocating an NFVI resource, and monitoring and collecting NFVI running status information.
EM (Element Manager, element manager): responsible for managing an element, including performance monitoring, service configuration, and the like of the element.
VNF catalog functional entity: used to store and manage VNF information.
NS catalog functional entity: used to store NS information and manage NS deployment template information.
NFV instance repository (NFV instance repository): used to store all VNF instances (instance) and information about the NS instances.
NFVI resource repository (NFVI resource repository): used to store available/reserved/allocated resource information of an NFVI.

Related interfaces of the NFV E2E architecture are as follows:
Ve-Vnfm-em interface: used to exchange information between the EM and the VNFM, including information related to VNF instance query, VNF instance update, and the like.
Ve-Vnfm-em interface: used to exchange information between the VNF and the VNFM, including information related to VNF instance query, VNF instance update, and the like.
Os-Ma-nfvo interface: used to exchange information between the OSS/BSS and the NFVO, including information related to NSD and VNF package management, NS instance life time management, and the like.
Nf-Vi interface: used to exchange information between the VIM and the NFVI, including information related to VM resource allocation, VM migration, inter-VM link creation, and the like.
Or-Vnfm interface: used to exchange information between the NFVO and the VNFM, including information related to NFVI resource authorization and authentication, VNF instantiation, and the like.
Or-Vi interface: used to exchange information between the NFVO and the VIM, including information related to NFVI resource reservation, NFVI resource allocation, and the like.
Vi-Vnfm interface: used to exchange information between the VIM and the VNFM, including information related to NFVI resource reservation information query, NFVI resource allocation and resource release, and the like.

"Multiple" refers to two or more. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

In the following, preferred embodiments of the present invention are described in detail with reference to the accompanying drawings of the specification. It should be understood that the preferred embodiments described herein are merely used to illustrate and explain the present invention, but are not intended to limit the present invention. In addition, the embodiments of the present application and features in the embodiments may be mutually combined in a case in which they do not conflict with each other.

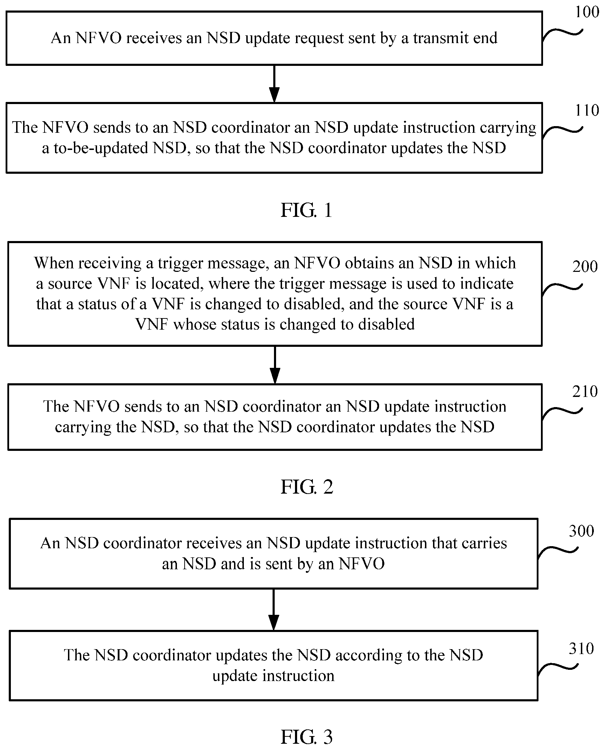

Referring to FIG. 1, in an embodiment of the present invention, a process for updating an NSD is as follows:
Step 100: An NFVO receives an NSD update request sent by a transmit end.
Step 110: The NFVO sends to an NSD coordinator an NSD update instruction carrying a to-be-updated NSD, so that the NSD coordinator updates the NSD.

In this embodiment of the present invention, the transmit end may be an OSS or a BSS, or may be another functional entity, and details are not described herein.

In this embodiment of the present invention, optionally, the NSD update request may directly carry the NSD, or may be in the following manner:

The NSD update request carries an NSD identifier corresponding to the NSD; and
after the NFVO receives the NSD update request and before the NFVO sends the NSD update instruction, the process further includes:

The NFVO obtains the NSD according to the NSD identifier.

That is, the NSD may be directly sent to the NFVO by the transmit end, or the NSD identifier may be sent to the NFVO by the transmit end, and the NFVO obtains the NSD according to the NSD identifier.

Updating the NSD may be updating a configuration parameter of a VNF in the NSD, that is, relates to a configuration parameter of a source VNF and a configuration parameter of a target VNF. Therefore, in this embodiment of the present invention, the NSD update request further carries a source virtualized network function VNF identifier and a target VNF identifier. Only in this way, the NSD coordinator can know a configuration parameter of a VNF is to be used to replace a configuration parameter of another VNF.

Further, in this embodiment of the present invention, before the NFVO sends to the NSD coordinator the NSD update instruction, the process further includes the following operation:

The NFVO obtains a target VNF package corresponding to the target VNF identifier.

When the NFVO sends to the NSD coordinator the NSD update instruction, optionally, the following manner may be used:
The NFVO sends to the NSD coordinator the NSD update instruction, wherein the NSD update instruction further carries the target VNF package and the source VNF identifier.

In this embodiment of the present invention, to improve security, further, before the NFVO sends to the NSD coordinator the NSD update instruction, the process further includes the following operation:
The NFVO determines that the transmit end is authorized to send the NSD update request. That is, the transmit end is authorized and authenticated.

Certainly, integrity of the request sent by the transmit end further needs to be authenticated. These are all relatively well-known technologies. Therefore, details are not described herein.

The configuration parameter of the source VNF in the to-be-updated NSD may be tampered with due to viruses or attacks. In this case, if a status of an NSD that is recorded in an NS catalog functional entity is still enabled (enabled), a potential risk exists. Therefore, in this embodiment of the present invention, further, after the NFVO receives the NSD update request sent by the transmit end, the process further includes the following operation:
sending the NS catalog functional entity a notification message carrying the NSD identifier, where the notification message is used to instruct the NS catalog functional entity to record a status of the NSD corresponding to the NSD identifier as disabled (disabled). In this way, an NSD that is not updated is not to be used.

Current usage status information of the VNF package is recorded in a VNF catalog, and if the status of the NSD changes, the VNF catalog needs to be instructed to update a status of the VNF package. Therefore, in this embodiment of the present invention, further, after the NFVO sends to the NSD coordinator the NSD update instruction, the process further includes the following operations:
receiving an NSD update complete message that is sent by the NSD coordinator after finishing updating the NSD;
adding the target VNF identifier to the NSD update complete message; and
sending to a VNF catalog functional entity the NSD update complete message to which the target VNF identifier is added, so that the VNF catalog functional entity updates a status of a target VNF corresponding to the target VNF identifier.

In this embodiment of the present invention, an NS may be instantiated and is running. In this case, the NSD and some NS elements need to be updated. Therefore, after the NFVO receives the NSD update complete message, the process further includes the following operations:
operating the target VNF package, and instantiating the target VNF to run the target VNF;
obtaining a source VNF corresponding to the source VNF identifier; and
switching data running on the source VNF corresponding to the source VNF identifier to the running target VNF to run.

In this embodiment of the present invention, after the NFVO sends to the VNF catalog functional entity the NSD update complete message to which the target VNF identifier is added, the process further includes the following operations:
receiving a status update complete message of the target VNF that is returned by the VNF catalog functional entity; and
sending the NSD update complete message to a transmit end after the status update complete message of the target VNF is received.

The status of the NSD mentioned above is enabled (enable) and disabled (disable). Certainly, the status of the NSD is not limited to the foregoing two states. In this case, there may be another state, such as delete pending (delete pending).

The NSD includes various types of content, and the foregoing description uses VNF replacement as an example. Certainly, in actual application, updating the NSD may be replacing a VL (Virtualized Link, virtual link) or another component in the NSD. An update process is similar to a VNF replacement process, and details are not described herein.

The foregoing description indicates that the NFVO sends the NSD update instruction to the NSD coordinator after the transmit end sends the NSD update request to the NFVO. Certainly, in actual application, another trigger condition may be used. Therefore, another method for updating an NSD is provided. As shown in FIG. 2, a specific process is as follows:
Step 200: When receiving a trigger message, an NFVO obtains an NSD in which a source VNF is located, where the trigger message is used to indicate that a status of a VNF is changed to disabled, and the source VNF is a VNF whose status is changed to disabled.
Step 210: The NFVO sends to an NSD coordinator an NSD update instruction carrying the NSD, so that the NSD coordinator updates the NSD.

In this embodiment of the present invention, the trigger message may come from a VNFM, a VIM, or another functional entity.

In this embodiment of the present invention, there are multiple reasons that the status of the VNF is changed to disabled. For example, the VNF is damaged.

In this embodiment of the present invention, to improve security, after receiving the trigger message, the NFVO does not instantly send the NSD update instruction to the NSD coordinator, but before the NFVO sends the NSD update instruction to the NSD coordinator, the process further includes the following operation:

The NFVO receives an update confirm message returned by a VNF catalog functional entity, where the update confirm message is used to notify the NFVO that the NSD can be updated.

That is, after receiving the trigger message and further receiving the update confirm message, the NFVO sends the NSD update instruction to the NSD coordinator.

In this embodiment of the present invention, the NFVO may determine an NSD update policy by itself, or the NSD update policy may come from the update confirm message. That is, the update confirm message carries NSD update policy information, and the NSD update policy information is used to indicate how the NSD is updated.

After the update confirm message is received, if there is no NSD update policy information in the update confirm message, and the NFVO cannot formulate the NSD update policy, the NFVO does not send the NSD update instruction to the NSD coordinator.

Certainly, in actual application, the NFVO may receive an update deny message, and the update deny message is used to notify the NFVO that the NSD cannot be updated.

If the NSD is not to be updated, the NFVO notifies an NS catalog (catalog) and identifies the NSD as disabled (disabled).

In this embodiment of the present invention, before the NFVO sends to the NSD coordinator the NSD update instruction carrying the NSD, the process further includes the following operation:
obtaining a target VNF package and an identifier of the source VNF; where
the NSD update instruction further carries the target VNF package and the identifier of the source VNF.

A configuration parameter of the source VNF in a to-be-updated NSD may be tampered with due to viruses or attacks. In this case, if a status of the NSD recorded in an NS catalog functional entity is still enabled (enable), a potential risk exists. Therefore, in this embodiment of the present invention, after the NFVO sends to the NSD coordinator the NSD update instruction, the process further includes the following operations:
receiving an NSD update complete message that is sent by the NSD coordinator after finishing updating the NSD;
obtaining a target VNF identifier corresponding to the target VNF package, and adding the target VNF identifier to the NSD update complete message; and
sending to the VNF catalog functional entity the NSD update complete message to which the target VNF identifier is added, so that the VNF catalog functional entity updates a status of a target VNF corresponding to the target VNF identifier.

In this embodiment of the present invention, after the receiving, by the NFVO, an NSD update complete message that is sent by the NSD coordinator after finishing completing the NSD, the process further includes the following operations:
operating the target VNF package, and instantiating the target VNF to run the target VNF; and
switching data running on the source VNF corresponding to the identifier of the source VNF to the running target VNF to run.

In this embodiment of the present invention, after the sending, by the NFVO, the VNF catalog functional entity the NSD update complete message to which the target VNF identifier is added, the process further includes:
receiving a status update complete message of the target VNF that is returned by the VNF catalog functional entity; and
sending the NSD update complete message to a transmit end after the status update complete message of the target VNF is received.

The status of the NSD mentioned above is enabled (enable) and disabled (disable). Certainly, the status of the NSD is not limited to the foregoing two states. In this case, there may be another state, such as delete pending (delete pending).

The NSD includes various types of content, and the foregoing description uses VNF replacement as an example. Certainly, in actual application, updating the NSD may be replacing a VL or another component in the NSD. An update process is similar to a VNF replacement process, and details are not described herein.

In an embodiment of the present invention, as shown in FIG. 3, a method for updating an NSD is further provided:
Step 300: An NSD coordinator receives an NSD update instruction that carries an NSD and is sent by an NFVO.
Step 310: The NSD coordinator updates the NSD according to the NSD update instruction.

In this embodiment of the present invention, the NSD update instruction further carries a target VNF package and a source VNF identifier.

When the NSD coordinator updates the NSD according to the NSD update instruction, optionally, the following manners may be used:

The NSD coordinator determines a configuration parameter that is corresponding to the source VNF identifier and in the NSD;
the NSD coordinator obtains a parameter value that is corresponding to the configuration parameter and in the target VNF package; and
the NSD coordinator replaces an initial parameter value corresponding to the configuration parameter with the determined parameter value.

A configuration parameter of a source VNF in a to-be-updated NSD may be tampered with due to viruses or attacks. In this case, if a status of an NSD that is recorded in an NS catalog functional entity is still enabled (enable), a potential risk exists. Therefore, in this embodiment of the present invention, after the NSD coordinator updates the NSD according to the NSD update instruction, the method further includes the following operations:
sending an NSD update complete message to the NFVO; and
sending the NS catalog functional entity a notification message carrying an updated NSD, where the notification message is used to notify the NS catalog functional entity that a status of the updated NSD is enabled.

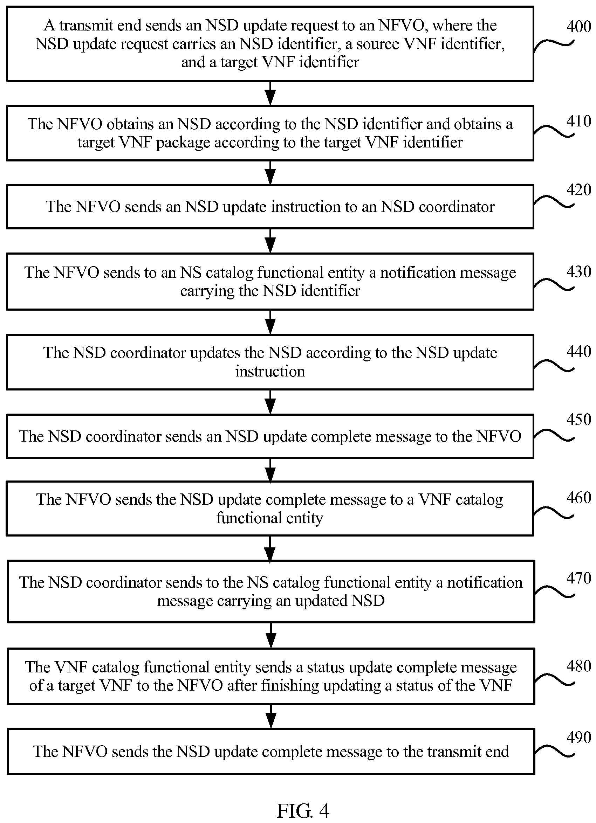

Referring to FIG. 4, to better understand an embodiment of the present invention, the following provides a specific application scenario to further describe a process for updating an NSD in detail:
Step 400: A transmit end sends an NSD update request to an NFVO, where the NSD update request carries an NSD identifier, a source VNF identifier, and a target VNF identifier.
Step 410: The NFVO obtains an NSD according to the NSD identifier and obtains a target VNF package according to the target VNF identifier.
Step 420: The NFVO sends an NSD update instruction to an NSD coordinator.

In this step, the NSD update instruction carries the NSD, the target VNF package, and the source VNF identifier.

Step 430: The NFVO sends to an NS catalog functional entity a notification message carrying the NSD identifier.

In this step, the notification message is used to instruct the NS catalog functional entity to record a status of the NSD corresponding to the NSD identifier as disabled.

Step 440: The NSD coordinator updates the NSD according to the NSD update instruction.

Step 450: The NSD coordinator sends an NSD update complete message to the NFVO.

Step 460: The NFVO sends the NSD update complete message to a VNF catalog functional entity.

Step 470: The NSD coordinator sends to the NS catalog functional entity a notification message carrying an updated NSD.

Step 480: The VNF catalog functional entity sends a status update complete message of a target VNF to the NFVO after updating a status of the VNF.

Step 490: The NFVO sends the NSD update complete message to a transmit end.

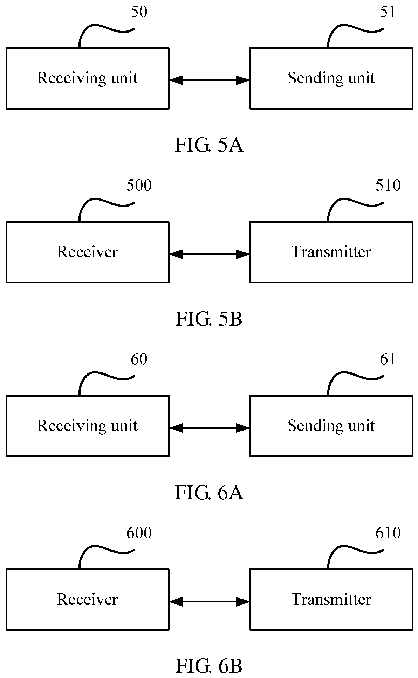

Based on the foregoing technical solutions corresponding to the methods, referring to FIG. 5A, an embodiment of the present invention provides an NFVO, and the NFVO includes a receiving unit 50 and a sending unit 51.

The receiving unit 50 is configured to receive an NSD update request sent by a transmit end; and
the sending unit 51 is configured to send to an NSD coordinator an NSD update instruction carrying a to-be-updated NSD, so that the NSD coordinator updates the NSD.

In this embodiment of the present invention, optionally, the NSD update request carries the NSD; or
the NSD update request carries an NSD identifier corresponding to the NSD.

Further, the NFVO further includes an obtaining unit, configured to obtain the NSD according to the NSD identifier.

In this embodiment of the present invention, optionally, the NSD update request further carries a source virtualized network function VNF identifier and a target VNF identifier; and
the obtaining unit is further configured to:
obtain a target VNF package corresponding to the target VNF identifier.

In this case, optionally, that the sending unit 51 sends to the NSD coordinator the NSD update instruction is specifically:
sending the NSD coordinator the NSD update instruction, wherein the NSD update instruction further carries the target VNF package and the source VNF identifier.

In this embodiment of the present invention, further, the receiving unit 50 is further configured to:
determine that the transmit end is authorized to send the NSD update request.

In this embodiment of the present invention, further, the sending unit 51 is further configured to:
send an NS catalog functional entity a notification message carrying the NSD identifier, where the notification message is used to instruct the NS catalog functional entity to record a status of the NSD corresponding to the NSD identifier as disabled.

In this embodiment of the present invention, further, the receiving unit 50 is further configured to:
receive an NSD update complete message that is sent by the NSD coordinator after finishing updating the NSD; and
add the target VNF identifier to the NSD update complete message; and
the sending unit 51 is further configured to send to a VNF catalog functional entity the NSD update complete message to which the target VNF identifier is added, so that the VNF catalog functional entity updates a status of a target VNF corresponding to the target VNF identifier.

In this embodiment of the present invention, further, the NFVO further includes an instantiation unit and the instantiation unit is configured to:
operate the target VNF package, and instantiate the target VNF to run the target VNF;
obtain a source VNF corresponding to the source VNF identifier; and
switch data running on the source VNF corresponding to the source VNF identifier to the running target VNF to run.

In this embodiment of the present invention, further, the receiving unit 50 is further configured to:
receive a status update complete message of the target VNF that is returned by the VNF catalog functional entity; and
the sending unit 51 is further configured to send the NSD update complete message to a transmit end after the status update complete message of the target VNF is received.

Based on the foregoing technical solutions corresponding to the methods, referring to FIG. 5B, an embodiment of the present invention further provides an NFVO, and the NFVO includes a receiver 500 and a transmitter 510.

The receiver 500 is configured to receive an NSD update request sent by a transmit end; and
the transmitter 510 is configured to send to an NSD coordinator an NSD update instruction carrying a to-be-updated NSD, so that the NSD coordinator updates the NSD.

In this embodiment of the present invention, optionally, the NSD update request carries the NSD; or
the NSD update request carries an NSD identifier corresponding to the NSD.

Further, the NFVO further includes a processor, configured to obtain the NSD according to the NSD identifier.

In this embodiment of the present invention, optionally, the NSD update request further carries a source virtualized network function VNF identifier and a target VNF identifier; and
the processor is further configured to:
obtain a target VNF package corresponding to the target VNF identifier.

In this case, optionally, that the transmitter 510 sends to the NSD coordinator the NSD update instruction is specifically:
sending the NSD coordinator the NSD update instruction, wherein the NSD update instruction further carries the target VNF package and the source VNF identifier.

In this embodiment of the present invention, further, the receiver 500 is further configured to:
determine that the transmit end is authorized to send the NSD update request.

In this embodiment of the present invention, further, the transmitter 510 is further configured to:
send an NS catalog functional entity a notification message carrying the NSD identifier, where the notification message is used to instruct the NS catalog functional entity to record a status of the NSD corresponding to the NSD identifier as disabled.

In this embodiment of the present invention, further, the receiver 500 is further configured to:
receive an NSD update complete message that is sent by the NSD coordinator after finishing updating the NSD; and
add the target VNF identifier to the NSD update complete message; and
the transmitter 510 is further configured to send to a VNF catalog functional entity the NSD update complete message to which the target VNF identifier is added, so that the VNF catalog functional entity updates a status of a target VNF corresponding to the target VNF identifier.

In this embodiment of the present invention, further, the processor is further configured to:
operate the target VNF package, and instantiate the target VNF to run the target VNF;
obtain a source VNF corresponding to the source VNF identifier; and
switch data running on the source VNF corresponding to the source VNF identifier to the running target VNF to run.

In this embodiment of the present invention, further, the receiver 500 is further configured to:
receive a status update complete message of the target VNF that is returned by the VNF catalog functional entity; and
the transmitter 510 is further configured to send the NSD update complete message to a transmit end after the status update complete message of the target VNF is received.

Based on the foregoing technical solutions corresponding to the methods, referring to FIG. 6A, an embodiment of the present invention further provides an NFVO, and the NFVO includes a receiving unit 60 and a sending unit 61.

The receiving unit 60 is configured to: when receiving a trigger message, obtain a network service descriptor NSD in which a source VNF is located, where the trigger message is used to indicate that a status of a virtualized network function VNF is changed to disabled, and the source VNF is a VNF whose status is changed to disabled; and
the sending unit 61 is configured to send to an NSD coordinator an NSD update instruction carrying an NSD, so that the NSD coordinator updates the NSD.

In this embodiment of the present invention, further, the receiving unit 60 is further configured to:
receive an update confirm message returned by a VNF catalog functional entity, where the update confirm message is used to notify the NFVO that the NSD can be updated.

In this embodiment of the present invention, optionally, the update confirm message carries NSD update policy information, and the NSD update policy information is used to indicate how the NSD is updated.

In this embodiment of the present invention, further, the NFVO further includes an obtaining unit and the obtaining unit is configured to:
obtain a target VNF package and an identifier of the source VNF; where
the NSD update instruction further carries the target VNF package and the identifier of the source VNF.

In this embodiment of the present invention, further, the receiving unit 60 is further configured to:
receive an NSD update complete message that is sent by the NSD coordinator after finishing updating the NSD; and
obtain a target VNF identifier corresponding to the target VNF package, and add the target VNF identifier to the NSD update complete message; and
the sending unit 61 is further configured to send to the VNF catalog functional entity the NSD update complete message to which the target VNF identifier is added, so that the VNF catalog functional entity updates a status of a target VNF corresponding to the target VNF identifier.

In this embodiment of the present invention, further, the NFVO further includes an instantiation unit and the instantiation unit is further configured to:
operate the target VNF package, and instantiate the target VNF to run the target VNF; and
switch data running on the source VNF corresponding to the identifier of the source VNF to the running target VNF to run.

In this embodiment of the present invention, further, the receiving unit 60 is further configured to:
receive a status update complete message of the target VNF that is returned by the VNF catalog functional entity; and
the sending unit 61 is further configured to send the NSD update complete message to a transmit end after the status update complete message of the target VNF is received.

Based on the foregoing technical solutions corresponding to the methods, referring to FIG. 6B, an embodiment of the present invention further provides an NFVO, and the NFVO includes a receiver 600 and a transmitter 610.

The receiver 600 is configured to: when receiving a trigger message, obtain a network service descriptor NSD in which a source VNF is located, where the trigger message is used to indicate that a status of a virtualized network function VNF is changed to disabled, and the source VNF is a VNF whose status is changed to disabled; and
the transmitter 610 is configured to send to an NSD coordinator an NSD update instruction carrying an NSD, so that the NSD coordinator updates the NSD.

In this embodiment of the present invention, further, the receiver 600 is further configured to:
receive an update confirm message returned by a VNF catalog functional entity, where the update confirm message is used to notify the NFVO that the NSD can be updated.

In this embodiment of the present invention, optionally, the update confirm message carries NSD update policy information, and the NSD update policy information is used to indicate how the NSD is updated.

In this embodiment of the present invention, further, the NFVO further includes a processor, and the processor is configured to:
obtain a target VNF package and an identifier of the source VNF; where
the NSD update instruction further carries the target VNF package and the identifier of the source VNF.

In this embodiment of the present invention, further, the receiver 600 is further configured to:
receive an NSD update complete message that is sent by the NSD coordinator after finishing updating the NSD; and
obtain a target VNF identifier corresponding to the target VNF package, and add the target VNF identifier to the NSD update complete message; and
the transmitter 610 is further configured to send to the VNF catalog functional entity the NSD update complete message to which the target VNF identifier is added, so that the VNF catalog functional entity updates a status of a target VNF corresponding to the target VNF identifier.

In this embodiment of the present invention, further, the processor is further configured to:
operate the target VNF package, and instantiate the target VNF to run the target VNF; and
switch data running on the source VNF corresponding to the identifier of the source VNF to the running target VNF to run.

In this embodiment of the present invention, further, the receiver 600 is further configured to:
receive a status update complete message of the target VNF that is returned by the VNF catalog functional entity; and
the transmitter 610 is further configured to send the NSD update complete message to a transmit end after the status update complete message of the target VNF is received.

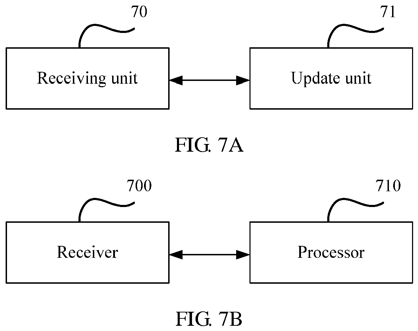

Based on the foregoing technical solutions corresponding to the methods, referring to FIG. 7A, an embodiment of the present invention further provides an NSD coordinator, and the NSD coordinator includes a receiving unit 70 and an update unit 71.

The receiving unit 70 is configured to receive an NSD update instruction that carries an NSD and is sent by a network functions virtualization orchestrator NFVO; and
the update unit 71 is configured to update the NSD according to the NSD update instruction.

In this embodiment of the present invention, optionally, the NSD update instruction further carries a target VNF package and a source virtualized network function VNF identifier.

In this embodiment of the present invention, optionally, the update unit is specifically configured to:
determine a configuration parameter that is corresponding to the source VNF identifier and in the NSD;
obtain a parameter value that is corresponding to the configuration parameter and in the target VNF package; and
replace an initial parameter value corresponding to the configuration parameter with the determined parameter value.

In this embodiment of the present invention, further, a sending unit is configured to:
send an NSD update complete message to the NFVO; and
send an NS catalog functional entity a notification message carrying an updated NSD, where the notification message is used to notify the NS catalog functional entity that a status of the updated NSD is enabled.

Based on the foregoing technical solutions corresponding to the methods, referring to FIG. 7B, an embodiment of the present invention further provides an NSD coordinator, and the NSD coordinator includes a receiver 700 and a processor 710.

The receiver 700 is configured to receive an NSD update instruction that carries an NSD and is sent by a network functions virtualization orchestrator NFVO; and
the processor 710 is configured to update the NSD according to the NSD update instruction.

In this embodiment of the present invention, optionally, the NSD update instruction further carries a target VNF package and a source virtualized network function VNF identifier.

In this embodiment of the present invention, optionally, the processor 710 is specifically configured to:
determine a configuration parameter that is corresponding to the source VNF identifier and in the NSD;
obtain a parameter value that is corresponding to the configuration parameter and in the target VNF package; and
replace an initial parameter value corresponding to the configuration parameter with the determined parameter value.

In this embodiment of the present invention, further, the NSD coordinator further includes a transmitter, and the transmitter is configured to:
send an NSD update complete message to the NFVO; and
send an NS catalog functional entity a notification message carrying an updated NSD, where the notification message is used to notify the NS catalog functional entity that a status of the updated NSD is enabled.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, a person skilled in the art can make changes and modifications to these embodiments once they learn the basic inventive concept. Therefore, the following claims are intended to be construed as to cover the preferred embodiments and all changes and modifications falling within the scope of the present invention.

Obviously, a person skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A method for updating a network service descriptor NSD, comprising:
receiving, by a network functions virtualization orchestrator NFVO, an NSD update request from a transmit end; and
sending, by the NFVO, to an NSD coordinator an NSD update instruction carrying a to-be-updated NSD, so that the NSD coordinator updates the NSD.

2. The method according to claim 1, wherein the NSD update request carries the NSD; or
the NSD update request carries an NSD identifier corresponding to the NSD; and
after the receiving, by an NFVO, an NSD update request and before the sending, by the NFVO, an NSD update instruction, the method further comprises:
obtaining, by the NFVO, the NSD according to the NSD identifier.

3. The method according to claim 2, wherein the NSD update request further carries a source virtualized network function VNF identifier and a target VNF identifier;
before the sending, by the NFVO, to an NSD coordinator an NSD update instruction, the method further comprises:
obtaining, by the NFVO, a target VNF package corresponding to the target VNF identifier; and
the sending, by the NFVO, to an NSD coordinator an NSD update instruction specifically comprises:
sending, by the NFVO, to the NSD coordinator the NSD update instruction, wherein the NSD update instruction further carries the target VNF package and the source VNF identifier.

4. The method according to any one of claims 1 to 3, wherein before the sending, by the NFVO, to an NSD coordinator an NSD update instruction, the method further comprises:
determining, by the NFVO, that the transmit end is authorized to send the NSD update request.

5. The method according to any one of claims 2 to 4, wherein after the receiving, by an NFVO, an NSD update request from a transmit end, the method further comprises:
sending to a network service NS catalog functional entity a notification message carrying the NSD identifier, wherein the notification message is used to instruct the NS catalog functional entity to record a status of the NSD corresponding to the NSD identifier as disabled.

6. The method according to any one of claims 2 to 5, wherein after the sending, by the NFVO, to an NSD coordinator an NSD update instruction, the method further comprises:
receiving an NSD update complete message that is sent by the NSD coordinator after finishing updating the NSD;
adding the target VNF identifier to the NSD update complete message; and
sending to a VNF catalog functional entity the NSD update complete message to which the target VNF identifier is added, so that the VNF catalog functional entity updates a status of a target VNF corresponding to the target VNF identifier.

7. The method according to claim 6, wherein after the receiving, by the NFVO, an NSD update complete message, the method further comprises:
operating the target VNF package, and instantiating the target VNF to run the target VNF;
obtaining a source VNF corresponding to the source VNF identifier; and
switching data running on the source VNF corresponding to the source VNF identifier to the running target VNF to run.

8. The method according to claim 6, wherein after the sending, by the NFVO, to a VNF catalog functional entity the NSD update complete message to which the target VNF identifier is added, the method further comprises:
receiving a status update complete message of the target VNF from the VNF catalog functional entity; and
sending the NSD update complete message to the transmit end after the status update complete message of the target VNF is received.

9. A method for updating a network service descriptor NSD, wherein the method comprises:
when receiving a trigger message, obtaining, by a network functions virtualization orchestrator NFVO, an NSD in which a source virtualized network function VNF is located, wherein the trigger message is used to indicate that a status of a VNF is changed to disabled, and the source VNF is a VNF whose status is changed to disabled; and
sending, by the NFVO, to an NSD coordinator an NSD update instruction carrying the NSD, so that the NSD coordinator updates the NSD.

10. The method according to claim 9, wherein before the sending, by the NFVO, to an NSD coordinator an NSD update instruction, the method further comprises:
receiving, by the NFVO, an update confirm message from a VNF catalog functional entity, wherein the update confirm message is used to notify the NFVO that the NSD can be updated.

11. The method according to claim 10, wherein the update confirm message carries NSD update policy information, and the NSD update policy information is used to indicate how the NSD is updated.

12. The method according to any one of claims 9 to 11, wherein before the sending, by the NFVO, to an NSD coordinator an NSD update instruction carrying the NSD, the method further comprises:
obtaining a target VNF package and an identifier of the source VNF; wherein
the NSD update instruction further carries the target VNF package and the identifier of the source VNF.

13. The method according to claim 12, wherein after the sending, by the NFVO, to an NSD coordinator an NSD update instruction, the method further comprises:
receiving an NSD update complete message that is sent by the NSD coordinator after finishing updating the NSD;
obtaining a target VNF identifier corresponding to the target VNF package, and adding the target VNF identifier to the NSD update complete message; and
sending to the VNF catalog functional entity the NSD update complete message to which the target VNF identifier is added, so that the VNF catalog functional entity updates a status of a target VNF corresponding to the target VNF identifier.

14. The method according to claim 13, wherein after the receiving, by the NFVO, an NSD update complete message that is from the NSD coordinator after finishing updating the NSD, the method further comprises:
operating the target VNF package, and instantiating the target VNF to run the target VNF; and
switching data running on the source VNF corresponding to the identifier of the source VNF to the running target VNF to run.

15. The method according to claim 13 or 14, wherein after the sending, by the NFVO, the VNF catalog functional entity the NSD update complete message to which the target VNF identifier is added, the method further comprises:
receiving a status update complete message of the target VNF from the VNF catalog functional entity; and
sending the NSD update complete message to a transmit end after the status update complete message of the target VNF is received.

16. A method for updating a network service descriptor NSD, comprising:
receiving, by an NSD coordinator, an NSD update instruction that carries an NSD from a network functions virtualization orchestrator NFVO; and
updating, by the NSD coordinator, the NSD according to the NSD update instruction.

17. The method according to claim 16, wherein the NSD update instruction further carries a target VNF package and a source virtualized network function VNF identifier; and
the updating, by the NSD coordinator, the NSD according to the NSD update instruction specifically comprises:
determining, by the NSD coordinator, a configuration parameter that is corresponding to the source VNF identifier and in the NSD;
obtaining, by the NSD coordinator, a parameter value that is corresponding to the configuration parameter and in the target VNF package; and
replacing, by the NSD coordinator, an initial parameter value corresponding to the configuration parameter with the determined parameter value.

18. The method according to claim 16 or 17, wherein after the updating, by the NSD coordinator, the NSD according to the NSD update instruction, the method further comprises:
sending an NSD update complete message to the NFVO; and
sending to a network service NS catalog functional entity a notification message carrying an updated NSD, wherein the notification message is used to notify the NS catalog functional entity that a status of the updated NSD is enabled.

19. A network functions virtualization orchestrator NFVO, comprising:
a receiving unit, configured to receive an NSD update request from a transmit end; and
a sending unit, configured to send to a network service descriptor NSD coordinator an NSD update instruction carrying a to-be-updated NSD, so that the NSD coordinator updates the NSD.

20. The NFVO according to claim 19, wherein the NSD update request carries the NSD; or
the NSD update request carries an NSD identifier corresponding to the NSD; and
the NFVO further comprises an obtaining unit, configured to obtain the NSD according to the NSD identifier.

21. The NFVO according to claim 20, wherein the NSD update request further carries a source virtualized network function VNF identifier and a target VNF identifier;
the obtaining unit is further configured to:
obtain a target VNF package corresponding to the target VNF identifier; and
that the sending unit sends to an NSD coordinator an NSD update instruction is specificall y:
sending the NSD coordinator the NSD update instruction, wherein the NSD update instruction further carries the target VNF package and the source VNF identifier.

22. The NFVO according to any one of claims 19 to 21, wherein the receiving unit is further configured to:
determine that the transmit end is authorized to send the NSD update request.

23. The NFVO according to any one of claims 20 to 22, wherein the sending unit is further configured to:
send to a network service NS catalog functional entity a notification message carrying the NSD identifier, wherein the notification message is used to instruct the NS catalog functional entity to record a status of the NSD corresponding to the NSD identifier as disabled.

24. The NFVO according to any one of claims 20 to 23, wherein the receiving unit is further configured to:
receive an NSD update complete message that is sent by the NSD coordinator after finishing updating the NSD; and
add the target VNF identifier to the NSD update complete message; and
the sending unit is further configured to send to a VNF catalog functional entity the NSD update complete message to which the target VNF identifier is added, so that the VNF catalog functional entity updates a status of a target VNF corresponding to the target VNF identifier.

25. The NFVO according to claim 24, wherein the NFVO further comprises an instantiation unit and the instantiation unit is configured to:
operate the target VNF package, and instantiate the target VNF to run the target VNF;
obtain a source VNF corresponding to the source VNF identifier; and
switch data running on the source VNF corresponding to the source VNF identifier to the running target VNF to run.

26. The NFVO according to claim 24, wherein the receiving unit is further configured to:
receive a status update complete message of the target VNF from the VNF catalog functional entity; and
the sending unit is further configured to send the NSD update complete message to a transmit end after the status update complete message of the target VNF is received.

27. A network functions virtualization orchestrator NFVO, comprising:
a receiving unit, configured to: when receiving a trigger message, obtain a network service descriptor NSD in which a source VNF is located, wherein the trigger message is used to indicate that a status of a virtualized network function VNF is changed to disabled, and the source VNF is a VNF whose status is changed to disabled; and
a sending unit, configured to send to an NSD coordinator an NSD update instruction carrying the NSD, so that the NSD coordinator updates the NSD.

28. The NFVO according to claim 27, wherein the receiving unit is further configured to:
receive an update confirm message from a VNF catalog functional entity, wherein the update confirm message is used to notify the NFVO that the NSD can be updated.

29. The NFVO according to claim 28, wherein the update confirm message carries NSD update policy information, and the NSD update policy information is used to indicate how the NSD is updated.

30. The NFVO according to any one of claims 27 to 29, wherein the NFVO further comprises an obtaining unit and the obtaining unit is configured to:
obtain a target VNF package and an identifier of the source VNF; wherein
the NSD update instruction further carries the target VNF package and the identifier of the source VNF.

31. The NFVO according to claim 30, wherein the receiving unit is further configured to:
receive an NSD update complete message that is sent by the NSD coordinator after finishing updating the NSD; and
obtain a target VNF identifier corresponding to the target VNF package, and add the target VNF identifier to the NSD update complete message; and
the sending unit is further configured to send to a VNF catalog functional entity the NSD update complete message to which the target VNF identifier is added, so that the VNF catalog functional entity updates a status of a target VNF corresponding to the target VNF identifier.

32. The NFVO according to claim 31, wherein the NFVO further comprises an instantiation unit and the instantiation unit is further configured to:
operate the target VNF package, and instantiate the target VNF to run the target VNF; and
switch data running on the source VNF corresponding to the identifier of the source VNF to the running target VNF to run.

33. The NFVO according to claim 31 or 32, wherein the receiving unit is further configured to:
receive a status update complete message of the target VNF from the VNF catalog functional entity; and
the sending unit is further configured to send the NSD update complete message to a transmit end after the status update complete message of the target VNF is received.

34. A network service descriptor NSD coordinator, comprising:
a receiving unit, configured to receive an NSD update instruction that carries an NSD from a network functions virtualization orchestrator NFVO; and
an update unit, configured to update the NSD according to the NSD update instruction.

35. The NSD according to claim 34, wherein the NSD update instruction further carries a target VNF package and a source virtualized network function VNF identifier; and
the update unit is specifically configured to:
determine a configuration parameter that is corresponding to the source VNF identifier and in the NSD;
obtain a parameter value that is corresponding to the configuration parameter and in the target VNF package; and
replace an initial parameter value corresponding to the configuration parameter with the determined parameter value.

36. The NSD according to claim 34 or 35, wherein the NSD further comprises a sending unit and the sending unit is configured to:
send an NSD update complete message to the NFVO; and
send to a network service NS catalog functional entity a notification message carrying an updated NSD, wherein the notification message is used to notify the NS catalog functional entity that a status of the updated NSD is enabled.
